# EUROPÄISCHE PATENTSCHRIFT

(11) **EP 3 132 878 B1**
(45) Veröffentlichungstag und Bekanntmachung des Hinweises auf die Patenterteilung: **09.01.2019**
(21) Anmeldenummer: 16184228.1
(22) Anmeldetag: 15.08.2016
(51) Int. Cl.: B23K 9/095

(54) **LICHTBOGEN-SCHWEISSVERFAHREN UND SCHWEISSSTROMQUELLE ZUR DURCHFÜHRUNG DES VERFAHRENS**
ARC WELDING METHOD AND WELDING POWER SOURCE FOR PERFORMING THE METHOD
PROCEDE DE SOUDAGE A L'ARC ET SOURCE D'ELECTRICITE DE SOUDAGE POUR LA REALISATION DU PROCEDE

(30) Priorität: 19.08.2015 DE 102015113746
(43) Veröffentlichungstag der Anmeldung: 22.02.2017
(73) Patentinhaber: Lorch Schweisstechnik GmbH, 71549 Auenwald (DE)
(72) Erfinder: JAESCHKE, Birger, 71522 Backnang (DE)
(74) Vertreter: Hoeger, Stellrecht & Partner Patentanwälte mbB

(56) Entgegenhaltungen:
- DE-A1- 4 323 924
- FR-A1- 2 884 741

## Beschreibung

Die Erfindung betrifft ein Lichtbogen-Schweißverfahren, bei dem der Schweißelektrode eines Schweißbrenners von einer Schweißstromquelle Schweißenergie zugeführt wird und zwischen der Schweißelektrode und einem auf einem Werkstück angeordneten Schmelzbad ein elektrischer Lichtbogen brennt. Außerdem betrifft die Erfindung eine Schweißstromquelle zur Durchführung des voranstehend genannten Lichtbogen-Schweißverfahrens, wobei die Schweißstromquelle ein Steuerteil und ein vom Steuerteil steuerbares Leistungsteil aufweist, und wobei eine Schweißelektrode eines Schweißbrenners über eine Stromleitung an einen Ausgang des Leistungsteils anschließbar ist und der Schweißelektrode vom Leistungsteil Schweißenergie bereitstellbar ist zur Ausbildung eines Lichtbogens zwischen der Schweißelektrode und einem auf einem Werkstück angeordneten Schmelzbad.

FR 2 884 741 A1 bildet die Basis für den Oberbegriff der Ansprüche 1 und 13.

Lichtbogen-Schweißverfahren, bei denen zwischen der Schweißelektrode eines Schweißbrenners und einem auf einem Werkstück angeordneten Schmelzbad ein Lichtbogen zur Erzeugung einer Schweißnaht brennt, sind in verschiedenen Ausgestaltungen bekannt. Vom Leistungsteil einer Schweißstromquelle wird der Schweißelektrode Schweißenergie in Form eines Schweißstroms und einer Schweißspannung bereitgestellt. Zwischen der Schweißelektrode und dem Werkstück bildet sich ein Lichtbogen aus, unter dessen Einfluss sich Schweißmaterial verflüssigt und dem Schmelzbad zum Verschweißen des Werkstücks zugeführt werden kann. Das Schweißmaterial kann dem Schweißbrenner beispielsweise in Form eines Schweißdrahtes zugeführt werden, dessen freies, dem Werkstück zugewandtes Ende eine abschmelzende Schweißelektrode ausbildet. Aufgrund des Lichtbogens wird das freie Ende des Schweißdrahtes so stark erhitzt, dass es sich verflüssigt und sich einzelne Tropfen ablösen, die in das Schmelzbad übergehen.

Soll eine vertikal verlaufende Schweißnaht erzeugt werden, so stellt dies an den Schweißer besondere Herausforderungen, da das Schmelzbad aufgrund der einwirkenden Schwerkraft die Neigung hat, vertikal nach unten abzufließen. Zwar besteht grundsätzlich die Möglichkeit, die Schweißnaht von oben nach unten anzubringen, so dass das flüssige Schmelzbad von oben in den Lichtbogenbereich hineindrängt. In vielen Fällen führt dies aber zu einer unbefriedigenden Qualität der Schweißnaht. In der Regel werden deshalb vertikal verlaufende Schweißnähte von unten nach oben erzeugt, wobei der Schweißer versucht, das flüssige Schmelzbad durch bereits erstarrtes Schweißmaterial abzustützen. Dies erfordert eine besondere Führung des Schweißbrenners, wobei dieser häufig nach Art eines Pendels hin und her geführt wird. Die pendelörmige Bewegung ist sehr sorgfältig auszuführen und erfordert vom Schweißer eine hohe Konzentration und Erfahrung.

Zur Vereinfachung der Führung des Schweißbrenners ist es bekannt, die Zuführung der Schweißenergie zur Schweißelektrode mittels eines Steuerteils der Schweißstromquelle in vorgegebener Weise zyklisch zu variieren, so dass sich während eines Zyklus aufeinanderfolgend definierte Arten von Lichtbogen ausbilden, nämlich zunächst ein sogenannter "Kurzlichtbogen" mit einer vorgegebenen Zeitdauer und anschließend ein sogenannter "Impulslichtbogen" mit einer vorgegebenen Zeitdauer. Es hat sich gezeigt, dass durch die aufeinanderfolgenden Lichtbogentypen dem Schweißer das Erzeugen einer qualitativ hochwertigen vertikalen Schweißnaht erleichtert wird. Die Zeitdauern des Kurzlichtbogens und des Impulslichtbogens müssen vor dem eigentlichen Schweißprozess eingestellt werden. Die Einstellung erfolgt in Anpassung an die jeweils aktuell zu lösende Schweißaufgabe. Hierbei kann vorgesehen sein, dass die Zeitdauern vor dem Schweißprozess an einem Bedienfeld der Schweißstromquelle manuell eingestellt und bei Bedarf während des Schweißprozesses manuell optimiert werden. Es kann auch eine übergeordnete Steuerung, zum Beispiel eine Automatisierungseinrichtung, zum Einsatz kommen, die die Zeitdauern der Lichtbogentypen vorgibt und erforderlichenfalls während des Schweißprozesses optimiert.

Alternativ oder ergänzend zur Art des Lichtbogens können zur Erzielung einer hochwertigen Schweißnaht auch sonstige Schweißparameter zyklisch verändert werden, beispielsweise der Schweißstrom, die Schweißspannung, die Vorschubgeschwindigkeit, mit der ein Schweißdraht dem Schweißbrenner zugeführt wird, die Pulsfrequenz, mit der der Schweißstrom und/oder die Schweißspannung verändert werden, die Strömungsrate eines der Schweißelektrode zugeführten Schutzgases und/oder Führungsparameter von miteinander verknüpften Schweißparametern.

Neben der vorherigen Festlegung der zeitlichen Steuerung zyklischer Parameteränderungen und deren Auslösung durch Zeitgeber der Schweißstromquelle ist es auch bekannt, Änderungen von Schweißparamatern durch äußere Ereignisse auszulösen, beispielsweise durch eine Bedienhandlung des Schweißers am Griff des Schweißbrenners, oder beispielsweise durch ein Signal einer Automatisierungseinrichtung, das bei Erreichen einer bestimmten Schweißnahtposition erzeugt wird.

Die vorherige Festlegung der Zeitdauern von sich zyklisch ändernden Schweißparametern hat den Nachteil, dass die Zeitdauern vor Beginn des eigentlichen Schweißprozesses vordefiniert werden müssen und daher nicht immer dem Optimum bei einer speziellen schweißtechnischen Anwendung entsprechen. Der Schweißprozess erfolgt somit nicht in optimaler Weise, so dass Fehler auftreten können und die Qualität der erzeugten Schweißnaht nicht in allen Fällen höchsten Anforderungen entspricht. Eine Korrektur der Zeitdauern während des Schweißprozesses über einen manuellen Eingriff hat den Nachteil, dass der Schweißer von seiner eigentlichen Tätigkeit der Schweißbrennerführung abgelenkt wird und es aufgrund der manuellen Bedienhandlung des Schweißers zu unerwünschten Bewegungen des Schweißbrenners und damit auch der Schweißelektrode kommen kann. Werden die Zeitdauern mit Hilfe einer Automatisierungseinrichtung optimiert, so erfordert dies einen beträchtlichen Aufwand zur Steuerung der Schweißstromquelle.

Werden Schweißparameter durch äußere Ereignisse verändert, beispielsweise durch eine Bedienhandlung des Schweißers am Griff des Schweißbrenners oder durch ein Signal einer Automatisierungseinrichtung, so ist dies auch deshalb fehleranfällig, da unbeabsichtigte Bedienhandlungen und zufällige Auslöseereignisse auftreten können, die die Qualität der Schweißnaht beeinträchtigen.

Aufgabe der vorliegenden Erfindung ist es daher, ein Lichtbogen-Schweißverfahren der eingangs genannten Art sowie eine Schweißstromquelle zur Durchführung des Lichtbogen-Schweißverfahrens derart weiterzubilden, dass unter Vermeidung zufälliger Auslöseereignisse eine gezielte zyklische Veränderung von mindestens einem Schweißparameter ermöglicht wird bei einfacher Handhabung des Schweißbrenners.

Diese Aufgabe wird bei einem gattungsgemäßen Lichtbogen-Schweißverfahren erfindungsgemäß dadurch gelöst, dass die Periodizität einer durch eine Relativbewegung zwischen der Schweißelektrode und dem Schmelzbad hervorgerufenen periodischen Änderung eines Schweißparameters erfasst wird und mindestens ein Schweißparameter von einem Steuerteil der Schweißstromquelle selbsttätig mit der erfassten Periodizität periodisch verändert wird.

In das erfindungsgemäße Lichtbogen-Schweißverfahren fließt der Gedanke mit ein, dass durch eine zyklische Relativbewegung zwischen der Schweißelektrode und dem Schmelzbad eine zyklische Veränderung von mindestens einem Schweißparameter hervorgerufen werden kann. Dies gibt dem Schweißer beispielsweise die Möglichkeit, zu Beginn eines Schweißprozesses den Schweißbrenner in der ihm optimal erscheinenden Art und Weise relativ zum Schmelzbad zyklisch zu bewegen, das heißt er führt mit dem Schweißbrenner eine periodische Bewegung aus, um eine konkret vorliegende Schweißaufgabe möglichst optimal zu lösen. Die periodische Relativbewegung zwischen der Schweißelektrode und dem Schmelzbad ruft eine periodische Änderung von mindestens einem Schweißparameter hervor, beispielsweise eine periodische Änderung des Schweißstroms. Die Periodizität dieser periodischen Änderung wird von der Schweißstromquelle selbsttätig erfasst und daraufhin wird von einem Steuerteil der Schweißstromquelle mindestens ein Schweißparameter mit der erfassten Periodizität periodisch verändert. Die von der Schweißstromquelle vorgenommene periodische Änderung von mindestens einem Schweißparameter, beispielsweise der Vorschubgeschwindigkeit des Schweißdrahtes, erleichtert dem Schweißer beim weiteren Schweißprozess die Führung des Schweißbrenners, denn es hat sich gezeigt, dass der Schweißer in der Regel dazu neigt, den Schweißbrenner "im Takt" der von der Schweißstromquelle vorgenommenen Änderung des mindestens einen Schweißparameters zu führen.

Die von der Schweißstromquelle vorgenommene periodische Änderung von mindestens einem Schweißparameter kann nach Erfassung der Periodizität allmählich erfolgen. Es kann also vorgesehen sein, dass zunächst die Periodizität einer durch eine Relativbewegung hervorgerufenen Änderung eines Schweißparameters erfasst wird und dass anschließend mindestens ein Schweißparameter allmählich periodisch geändert wird. Beispielsweise kann ein zunächst konstanter Schweißparameter innerhalb einer Übergangsphase mit zunehmender Amplitude periodisch verändert werden. Die Übergangsphase kann beispielsweise eine oder mehrere Sekunden andauern. Insbesondere kann vorgesehen sein, dass eine durch eine Relativbewegung hervorgerufene periodische Änderung des Schweißstroms eine periodische Änderung der Vorschubgeschwindigkeit des Schweißdrahtes zur Folge hat, wobei der Schweißdraht zunächst mit einer konstanten Vorschubgeschwindigkeit von beispielsweise 1 m/s bewegt wird und die Vorschubgeschwindigkeit innerhalb einer Übergangsphase von etwa 1 bis 3 Sekunden zunehmend periodisch geändert wird, so dass sie nach Ablauf der Übergangsphase periodische Änderungen erfährt mit Maximalwerten von beispielsweise 1,5 m/s und Minimalwerten von beispielsweise 0,5 m/s.

Maßgeblich für die periodische Veränderung des mindestens einen Schweißparameters durch die Schweißstromquelle ist die Periodizität der durch eine Relativbewegung zwischen der Schweißelektrode und dem Schmelzbad hervorgerufenen Änderung eines Schweißparameters. Eine Festlegung der Periodizität schon vor Beginn des eigentlichen Schweißprozesses und damit eine Festlegung, die möglicherweise nicht optimal an die konkret vorliegende Schweißaufgabe angepasst ist, ist nicht erforderlich, vielmehr kann der Schweißer den Schweißbrenner zur Lösung der konkret vorliegenden Schweißaufgabe in der ihm am besten erscheinenden Art und Weise relativ zum Schmelzbad periodisch bewegen, und die Periodizität der Schweißparameteränderung, die durch diese bewusst vorgenommene Relativbewegung hervorgerufen wird, wird dann für die von der Schweißstromquelle vorgenommenen zyklischen Änderung von mindestens einem Schweißparameter übernommen.

Die Relativbewegung zwischen der Schweißelektrode und dem Schmelzbad kann auch dadurch hervorgerufen werden, dass das Schmelzbad entlang der Schweißnaht einen unterschiedlichen Abstand zur Schweißelektrode einnimmt. Eine derartige Abstandsänderung kann beispielsweise beim Schweißen eines Wellblechs erfolgen, das heißt eines Blechs mit wellenförmig gestaltetem Querschnitt.

Das erfindungsgemäße Lichtbogen-Schweißverfahren kann auch bei einer Automatisierungseinrichtung zum Einsatz kommen, mit deren Hilfe während des Schweißvorgangs eine zyklische Relativbewegung zwischen der Schweißelektrode und zum Schmelzbad durchgeführt wird. Die Periodizität der Relativbewegung kann von der Schweißstromquelle für die Steuerung der zyklischen Änderung von mindestens einem Schweißparameter übernommen werden.

Die Erfassung der Periodizität einer Schweißparameteränderung, die durch eine Relativbewegung zwischen der Schweißelektrode und dem Schmelzbad hervorgerufen wird, hat unter anderem den Vorteil, dass Zufallsereignisse, die während einer Relativbewegung zwischen der Schweißelektrode und dem Schmelzbad auftreten können, keinen Einfluss haben auf die Steuerung der zyklischen Änderung von mindestens einem Schweißparameter, denn derartige Zufallsereignisse wirken sich nicht auf die Periodizität aus.

Von Vorteil ist es, wenn der zeitliche Verlauf der durch eine Relativbewegung zwischen der Schweißelektrode und dem Schmelzbad hervorgerufenen periodischen Änderung eines Schweißparameters erfasst wird und von der Schweißstromquelle der zeitliche Verlauf von mindestens einem Schweißparameter in Abhängigkeit vom erfassten zeitlichen Verlauf gesteuert wird. Bei einer derartigen Ausgestaltung fließt in den von der Schweißstromquelle gesteuerten Verlauf von mindestens einem Schweißparameter nicht nur die Periodizität, das heißt die Periodendauer, der Relativbewegung zwischen der Schweißelektrode und dem Schmelzbad ein, sondern in die Steuerung des mindestens einen Schweißparameters fließt der komplette zeitliche Verlauf der Relativbewegung mit ein. Dies ermöglicht es beispielsweise, mindestens einen Schweißparameter mittels der Schweißstromquelle gezielt in entsprechender Weise zu verändern wie sich die Position der Schweißelektrode relativ zum Schmelzbad ändert. Die Relativbewegung kann beispielsweise eine im Wesentlichen sinusförmige Änderung eines Schweißparameters, beispielsweise des Schweißstroms zur Folge haben. Der sinusförmige Verlauf, einschließlich der Periodendauer und Phasenlage, des Schweißparameters kann von der Schweißstromquelle erfasst werden und anschließend kann von der Schweißstromquelle mindestens ein Schweißparameter, beispielsweise die Vorschubgeschwindigkeit des Schweißdrahtes, in Abhängigkeit vom erfassten sinusförmigen Verlauf gesteuert werden. Der mindestens eine Schweißparameter kann beispielsweise ebenfalls sinusförmig mit der erfassten Frequenz und Phasenlage verändert werden. Es kann aber auch vorgesehen werden, dass der mindestens eine Schweißparameter beispielsweise rechteckförmig oder sägezahnförmig mit der Frequenz und der Phasenlage des erfassten Schweißparameters verändert wird.

Die Relativbewegung zwischen der Schweißelektrode und dem Schmelzbad wird beim erfindungsgemäßen Lichtbogen-Schweißverfahren anhand der Änderung eines Schweißparameters erfasst, wobei diese Änderung durch die Relativbewegung hervorgerufen wird. Bei diesem Schweißparameter kann es sich beispielsweise um den Schweißstrom handeln, der als Ausgangsstrom der Schweißstromquelle über die Schweißelektrode und den Lichtbogen zum Schmelzbad fließt. Eine Änderung der Relativlage zwischen der Schweißelektrode und dem Schmelzbad kann eine Änderung des Schweißstroms zur Folge haben, und diese Änderung des Schweißstroms kann messtechnisch erfasst werden. Die Periodizität der Schweißstromänderung kann dann in die Steuerung von mindestens einem Schweißparameter einfließen.

Wird beispielsweise der Abstand zwischen der Schweißelektrode und dem Schmelzbad vergrößert, so führt dies zu einer Erhöhung des Lichtbogenwiderstands und dies wiederum kann eine Verringerung des Schweißstroms zur Folge haben. Wird der Abstand zwischen der Schweißelektrode und dem Schmelzbad verkleinert, so führt dies zu einer Verringerung des Lichtbogenwiderstands und dies wiederum kann eine Erhöhung des Schweißstroms zur Folge haben. Die Periodizität der Relativbewegung zwischen der Schweißelektrode und dem Schmelzbad kann somit auf messtechnisch einfache Weise durch die periodische Änderung des Schweißstroms erfasst werden. Bei einer vorteilhaften Ausgestaltung des erfindungsgemäßen Lichtbogen-Schweißverfahrens wird daher die Periodizität der durch eine Relativbewegung zwischen der Schweißelektrode und dem Schmelzbad hervorgerufenen periodischen Änderung des Schweißstroms erfasst.

Es kann auch vorgesehen sein, dass die Periodizität der durch eine Relativbewegung zwischen der Schweißelektrode und dem Schmelzbad hervorgerufenen periodischen Änderung der Schweißspannung erfasst wird. Eine Änderung der Position der Schweißelektrode relativ zum Schmelzbad kann eine Änderung der Schweißspannung zur Folge haben, das heißt eine Änderung der Ausgangsspannung der Schweißstromquelle. Der zyklische Verlauf der Schweißspannung kann somit der zyklischen Relativbewegung der Schweißelektrode relativ zum Schmelzbad entsprechen. Die Periodizität der durch die zyklische Relativbewegung hervorgerufenen Änderung der Schweißspannung kann für die Steuerung der periodischen Änderung von mindestens einem Schweißparameter übernommen werden.

Eine Auswertung der durch eine Relativbewegung zwischen der Schweißelektrode und dem Schmelzbad hervorgerufenen periodischen Änderung des Schweißstroms oder der Schweißspannung ermöglicht es somit auf einfache Weise, mindestens einen Schweißparameter mit der erfassten Periodizität des Schweißstroms oder der Schweißspannung zu verändern.

Bei einer vorteilhaften Ausführungsform des erfindungsgemäßen Lichtbogen-Schweißverfahrens wird vom Steuerteil der Schweißstromquelle der Schweißstrom, die Schweißspannung, die Vorschubgeschwindigkeit eines dem Schweißbrenner kontinuierlich zugeführten Schweißdrahtes und/oder die Strömungsrate eines der Schweißstromelektrode zugeführten Schutzgases mit der erfassten Periodizität verändert. Die Periodizität einer durch eine Relativbewegung zwischen der Schweißelektrode und dem Schmelzbad hervorgerufenen periodischen Änderung eines Schweißparameters wird bei einer derartigen Ausgestaltung für die Steuerung der periodischen Veränderung des Schweißstroms, der Schweißspannung, der Vorschubgeschwindigkeit des Schweißdrahtes und/oder der Strömungsrate des Schutzgases übernommen. Das Schutzgas wird hierbei günstigerweise von einer Gaszufuhreinrichtung, die vom Steuerteil gesteuert wird, über eine Gasleitung dem Schweißbrenner zugeführt, so dass der Lichtbogen zwischen der Schweißelektrode und dem Schmelzgas in einer Schutzgasatmosphäre brennt. Die Zuführung des Schutzgases kann zur Lösung einer konkreten Schweißaufgabe periodisch verändert werden, wobei die Periodizität der Strömungsrate des Schutzgases der Periodizität einer durch eine Relativbewegung zwischen der Schweißelektrode und dem Schmelzbad hervorgerufenen periodischen Änderung eines Schweißparameters entspricht.

Bei einer vorteilhaften Ausführungsform des erfindungsgemäßen Lichtbogen-Schweißverfahrens wird der mindestens eine Schweißparameter, der vom Steuerteil mit der erfassten Periodizität periodisch verändert wird, aus einer Gruppe vorgegebener Schweißparameter ausgewählt. Dies gibt beispielsweise die Möglichkeit, vor Beginn eines Schweißprozesses aus einer vorgegebenen Gruppe von Schweißparametern einen oder mehrere Schweißparameter auszuwählen, die dann vom Steuerteil der Schweißstromquelle periodisch verändert werden, nachdem die Periodizität einer durch eine Relativbewegung zwischen der Schweißelektrode und dem Schmelzbad hervorgerufenen periodischen Änderung eines Schweißparameters erfasst wurde. Je nachdem, welche Schweißaufgabe gelöst werden soll, kann der Schweißer günstigerweise mittels eines Stellglieds an einem Bedienteil der Schweißstromquelle einen oder mehrere Schweißparameter auswählen, in deren Steuerung die durch die Relativbewegung zwischen der Schweißelektrode und dem Schmelzbad hervorgerufene periodische Änderung eines Schweißparameters einfließt.

Die Gruppe vorgegebener Schweißparameter weist bevorzugt zumindest den Schweißstrom, die Schweißspannung, die Vorschubgeschwindigkeit des dem Schweißbrenner zugeführten Schweißdrahtes und/oder die Strömungsrate des der Schweißelektrode zugeführten Schutzgases auf. Der Schweißer hat bei einer derartigen Ausgestaltung des erfindungsgemäßen Verfahrens beispielsweise die Möglichkeit, aus der Gruppe vorgegebener Schweißparameter die Vorschubgeschwindigkeit des Schweißdrahtes auszuwählen. Führt der Schweißer dann bei einem Schweißprozess eine zyklische Bewegung der Schweißelektrode relativ zum Schmelzbad aus, so hat dies eine zyklische Veränderung eines Schweißparameters, beispielsweise des Schweißstroms, zur Folge. Die Periodizität des Schweißparameters, im vorliegenden Beispiel also des Schweißstroms, wird erfasst und wird anschließend für die Steuerung der periodischen Veränderung eines Schweißparameters, beispielsweise der Vorschubgeschwindigkeit des Schweißdrahtes, übernommen.

Es kann vorgesehen sein, dass eine periodische Änderung des Schweißstroms, die durch eine Relativbewegung zwischen der Schweißelektrode und dem Schmelzbad hervorgerufen wird, während einer Erfassungsphase erfasst wird, und dass anschließend der Schweißstrom vom Steuerteil der Schweißstromquelle während einer Steuerphase mit der erfassten Periodizität periodisch verändert wird. Bei einer derartigen Ausgestaltung des erfindungsgemäßen Verfahrens kann während einer Erfassungsphase eine Änderung des Schweißstroms gezielt durch eine Relativbewegung zwischen der Schweißelektrode und dem Schmelzbad hervorgerufen werden, um eine Schweißaufgabe möglichst optimal zu lösen. Während der Erfassungsphase wird die Periodizität des Schweißstroms von der Schweißstromquelle erfasst. Während einer nachfolgenden Steuerphase wird dann der Schweißstrom von der Schweißstromquelle mit der erfassten Periodizität verändert, ohne dass hierzu eine weitere periodische Änderung der Relativposition erforderlich ist.

Es kann auch vorgesehen sein, dass während der Erfassungsphase die Periodizität der durch die Relativbewegung hervorgerufenen periodischen Änderung des Schweißstroms erfasst wird, und dass anschließend in der Steuerungsphase mindestens ein Schweißparameter, bei dem es sich nicht um den Schweißstrom handelt, vom Steuerteil der Schweißstromquelle mit der erfassten Periodizität periodisch verändert wird.

Der Steuerphase kann eine Übergangsphase vorangehen, in der die von der Schweißstromquelle vorgenommene periodische Änderung zunehmend verstärkt wird.

Von Vorteil ist es, wenn der Wertebereich, den der mindestens eine vom Steuerteil mit der erfassten Periodizität periodisch veränderte Schweißparameter periodisch durchläuft, der Steuereinheit vorgegeben wird. Die periodische Änderung des mindestens einen Schweißparameters, der vom Steuerteil gesteuert wird, erfolgt bei einer derartigen Ausgestaltung innerhalb des Wertebereichs, der dem Steuerteil vorgegeben wird. Die Vorgabe kann beispielsweise manuell mittels eines Stellelements erfolgen, das günstigerweise an einem Bedienteil der Schweißstromquelle angeordnet ist.

Bevorzugt werden der Minimalwert und der Maximalwert des mindestens einen vom Steuerteil mit der erfassten Periodizität periodisch veränderten Schweißparameters dem Steuerteil vorgegeben. Soll beispielsweise der Schweißstrom vom Steuerteil mit der erfassten Periodizität periodisch verändert werden, so können der minimale Schweißstrom und der maximale Schweißstrom vorgegeben werden. Die periodische Veränderung des Schweißstroms erfolgt anschließend - vorzugsweise nach Ablauf einer Übergangsphase mit zunehmenden Extremwerten - zwischen diesen Minimal- und Maximalwerten. In entsprechender Weise können beispielsweise ein Minimalwert und ein Maximalwert der Schweißspannung, der Vorschubgeschwindigkeit des Schweißdrahtes und/oder der Strömungsrate des Schutzgases vorgegeben werden.

Es kann vorgesehen sein, dass der Signalverlauf des mindestens einen Schweißparameters, der vom Steuerteil mit der erfassten Periodizität periodisch verändert wird, dem Steuerteil vorgegeben wird. Bei einer derartigen Ausgestaltung hat beispielsweise der Schweißer die Möglichkeit, den Signalverlauf des vom Steuerteil gesteuerten Schweißparameters vor Beginn eines Schweißprozesses vorzugeben. Die Periodizität des Signalverlaufs, also dessen Periodendauer, richtet sich nach der Periodizität der durch eine Relativbewegung zwischen der Schweißelektrode und dem Schmelzbad hervorgerufenen periodischen Änderung eines Schweißparameters. Eine zyklische Relativbewegung hat eine zyklische Änderung eines Schweißparameters, beispielsweise des Schweißstroms, zur Folge, und das Steuerteil steuert anschließend mindestens einen Schweißparameter mit der erfassten Periodizität, wobei der Signalverlauf des mindestens einen Schweißparameters vorgegeben werden kann.

Günstig ist es, wenn der Signalverlauf des mindestens einen Schweißparameters, der vom Steuerteil mit der erfassten Periodizität periodisch verändert wird, aus einer Gruppe vorgegebener Signalverläufe ausgewählt wird. Dies gibt beispielsweise die Möglichkeit, dem Schweißer mehrere Signalverläufe vorzugeben, aus denen er dann zur Lösung einer konkreten Schweißaufgabe einen bestimmten Signalverlauf auswählen kann, so dass mindestens ein Schweißparameter mit dem ausgewählten Signalverlauf und der erfassten Periodizität periodisch verändert wird.

Bei einer bevorzugten Ausgestaltung des erfindungsgemäßen Lichtbogen-Schweißverfahrens weist die Gruppe vorgegebener Signalverläufe zumindest einen sinusförmigen Signalverlauf, einen rechteckförmigen Signalverlauf und/oder einen sägezahnförmigen Signalverlauf auf. Dies gibt dem Schweißer beispielsweise die Möglichkeit, für die periodische Änderung eines vom Steuerteil gesteuerten Schweißparameters einen sinusförmigen Verlauf, einen rechteckförmigen Verlauf oder einen sägezahnförmigen Verlauf auszuwählen.

Wie eingangs erwähnt, betrifft die Erfindung nicht nur ein Lichtbogen-Schweißverfahren sondern auch eine Schweißstromquelle zur Durchführung des Verfahrens. Bei einer Schweißstromquelle der eingangs genannte Art wird die der Erfindung zugrundeliegende Aufgabe erfindungsgemäß dadurch gelöst, dass die Schweißstromquelle ein Erfassungsglied aufweist zum Erfassen der Periodizität einer durch eine Relativbewegung zwischen der Schweißelektrode und einem Schmelzbad hervorgerufenen periodischen Änderung eines Schweißparameters, und dass das Steuerteil ein mit dem Erfassungsglied gekoppeltes Steuerglied aufweist und vom Steuerglied mindestens ein Schweißparameter mit der erfassten Periodizität periodisch veränderbar ist.

Die erfindungsgemäße Schweißstromquelle weist ein Steuerteil und ein vom Steuerteil steuerbares Leistungsteil auf. Das Leistungsteil hat einen Ausgang, an den über eine Stromleitung eine Schweißelektrode eines Schweißbrenners angeschlossen werden kann. Über die Stromleitung kann der Schweißelektrode Schweißenergie bereitgestellt werden. Das Leistungsteil wird vom Steuerteil gesteuert. Die Schweißstromquelle weist ein Erfassungsglied auf, mit dem die Periodizität einer durch eine Relativbewegung zwischen der Schweißelektrode und dem Schmelzbad hervorgerufenen periodischen Änderung eines Schweißparameters erfasst werden kann. Wie bereits erwähnt, kann beispielsweise vorgesehen sein, dass die Periodizität einer durch die Relativbewegung hervorgerufenen periodischen Änderung des Schweißstroms erfasst wird. Das Erfassungsglied ist mit einem Steuerglied gekoppelt, so dass dem Steuerglied ein der erfassten Periodizität entsprechendes Signal bereitgestellt werden kann. Das Steuerglied steuert anschließend mindestens einen Schweißparameter, beispielsweise den Schweißstrom, die Schweißspannung, die Vorschubgeschwindigkeit des Schweißdrahtes und/oder die Strömungsrate des Schutzgases, mit der erfassten Periodizität, das heißt der entsprechende Schweißparameter ist mit der erfassten Periodizität periodisch veränderbar.

Wie bereits erwähnt, kann die von der Schweißstromquelle vorgenommene periodische Änderung von mindestens einem Schweißparameter nach Erfassung der Periodizität allmählich erfolgen. Es kann also vorgesehen sein, dass zunächst die Periodizität einer durch eine Relativbewegung hervorgerufenen Änderung eines Schweißparameters erfassbar ist und dass anschließend mindestens ein Schweißparameter allmählich periodisch veränderbar ist. Beispielsweise kann ein zunächst konstanter Schweißparameter innerhalb einer Übergangsphase mit zunehmender Amplitude periodisch verändert werden. Die Übergangsphase kann beispielsweise eine oder mehrere Sekunden andauern. Insbesondere kann vorgesehen sein, dass eine durch eine Relativbewegung hervorgerufene periodische Änderung des Schweißstroms eine periodische Änderung der Vorschubgeschwindigkeit des Schweißdrahtes zur Folge hat, wobei der Schweißdraht zunächst mit einer konstanten Vorschubgeschwindigkeit von beispielsweise 1 m/s bewegbar und die Vorschubgeschwindigkeit innerhalb einer Übergangsphase von etwa 1 bis 3 Sekunden zunehmend periodisch veränderbar ist, so dass sie nach Ablauf der Übergangsphase periodische Änderungen erfährt mit Maximalwerten von beispielsweise 1,5 m/s und Minimalwerten von beispielsweise 0,5 m/s.

Günstigerweise ist das Erfassungsglied in das Steuerteil integriert, das heißt das Erfassungsglied bildet ein Bauteil des Steuerteils aus.

Alternativ kann vorgesehen sein, dass das Erfassungsglied ein baulich vom Steuerteil getrenntes Bauteil der Schweißstromquelle ausbildet.

Bei einer vorteilhaften Ausführungsform der erfindungsgemäßen Schweißstromquelle weist das Erfassungsglied eine Messeinrichtung auf zum Erfassen des zeitlichen Verlaufs der durch eine Relativbewegung zwischen der Schweißelektrode und dem Schmelzbad hervorgerufenen periodischen Änderung des Schweißparameters, und die Schweißstromquelle weist eine Signalerzeugungseinrichtung auf zum Erzeugen eines Steuersignals in Abhängigkeit von dem erfassten zeitlichen Verlauf. Eine derartige Ausgestaltung gibt beispielsweise die Möglichkeit, den zeitlichen Verlauf des Schweißstroms zu erfassen, der sich bei einer zyklischen Relativbewegung zwischen der Schweißelektrode und dem Schmelzbad einstellt, und anschließend kann mittels der Signalerzeugungseinrichtung ein vom erfassten zeitlichen Verlauf abhängiges Steuersignal mit vorzugsweise während einer Übergangsphase zunehmenden Extremwerten erzeugt werden, das dem Steuerglied bereitgestellt werden kann.

Besonders günstig ist es, wenn während einer Erfassungsphase mittels der Messeinrichtung der zeitliche Verlauf einer durch eine Relativbewegung zwischen der Schweißelektrode und dem Schmelzbad hervorgerufenen periodischen Änderung eines Schweißparameters erfassbar ist, und wenn anschließend während einer Steuerungsphase mittels der Signalerzeugungseinrichtung ein vom erfassten zeitlichen Verlauf abhängiges Steuersignal erzeugt werden kann, das dem Steuerglied bereitstellbar ist zur Steuerung von mindestens einem Schweißparameter in Abhängigkeit vom erfassten zeitlichen Verlauf.

Die Signalerzeugungseinrichtung weist bei einer bevorzugten Ausgestaltung der erfindungsgemäßen Schweißstromquelle einen veränderbaren Oszillator auf, dessen Frequenz und Phasenlage an die Frequenz und Phasenlage des von der Messeinrichtung erfassten zeitlichen Verlaufs anpassbar ist. Anpassungsalgorithmen und dazu geeignete Schaltungsanordnungen sind dem Fachmann aus der Nachrichten-, Regel- und Messtechnik unter der Bezeichnung "Phasenregelschleife" (Phase-Locked Loop, PLL) bekannt. Überraschenderweise können derartige Algorithmen und Schaltungsanordnungen auch zur Ausgestaltung einer Schweißstromquelle zum Einsatz kommen. Sie haben den Vorteil, dass mit ihrer Hilfe innerhalb kurzer Zeit die Frequenz und die Phasenlage eines Oszillators an die Frequenz und die Phasenlage einer durch eine zyklische Relativbewegung zwischen der Schweißelektrode und dem Schmelzbad hervorgerufenen periodischen Änderung eines Schweißparameters angepasst werden kann.

Bei einer bevorzugten Ausgestaltung weist die Schweißstromquelle ein Signalverarbeitungsglied auf zur Verarbeitung eines vom Oszillator bereitgestellten Oszillatorsignals. Nach Anpassung seiner Frequenz und Phasenlage an die Frequenz und Phasenlage der durch eine zyklische Relativbewegung zwischen der Schweißelektrode und dem Schmelzbad hervorgerufenen periodischen Änderung eines Schweißparameters kann das Oszillatorsignal verarbeitet werden, um nach erfolgter Verarbeitung ein Steuersignal zu bilden, das dem Steuerglied bereitgestellt wird. Das Oszillatorsignal kann nach Anpassung seiner Frequenz und Phasenlage beispielsweise umgeformt, insbesondere gefiltert werden.

Günstig ist es, wenn der Signalverarbeitungseinrichtung zur Verarbeitung des Oszillatorsignals ein Signalverlauf vorgebbar ist und das Oszillatorsignal unter Beibehaltung seiner Frequenz und Phasenlage an den vorgegebenen Signalverlauf angleichbar ist. Dies gibt die Möglichkeit, einen gewünschten Signalverlauf für einen vom Steuerteil gesteuerten Schweißparameter vorzugeben. Das an die Frequenz und Phasenlage der durch eine zyklische Relativbewegung zwischen der Schweißelektrode und dem Schmelzbad hervorgerufenen periodischen Änderung eines Schweißparameters angepasste Oszillatorsignal kann dann an den gewünschten Signalverlauf angeglichen werden, und nach erfolgter Angleichung kann dann das Oszillatorsignal ein Steuersignal für das Steuerglied ausbilden zur Steuerung von mindestens einem Schweißparameter. Die Minimal- und Maximalwerte des Steuersignals können während einer Übergangsphase kontinuierlich oder stufig erhöht werden.

Der Signalverlauf ist bevorzugt aus einer Gruppe vorgegebener Signalverläufe auswählbar. Die Gruppe vorgegebener Signalverläufe kann beispielsweise einen sinusförmigen Signalverlauf, einen rechteckförmigen Signalverlauf und/oder einen sägezahnförmigen Signalverlauf aufweisen.

Günstigerweise umfasst das Steuerteil der Schweißstromquelle ein Speicherglied, in dem mehrere einzeln abrufbare Signalverläufe gespeichert sind. Aus dem Speicherglied kann ein vorgegebener Signalverlauf abgerufen werden, an das das Oszillatorsignal unter Beibehaltung seiner Frequenz und Phasenlage angeglichen wird.

Die nachfolgende Beschreibung einer vorteilhaften Ausführungsform der Erfindung dient im Zusammenhang mit der Zeichnung der näheren Erläuterung. Es zeigen:
- Figur 1:: eine schematische Darstellung einer Schweißeinrichtung mit einer erfindungsgemäßen Schweißstromquelle und einem Schweißbrenner;
- Figur 2:: eine schematische Darstellung eines Steuerteils der Schweißstromquelle aus Figur 1, und
- Figur 3:: eine schematische Darstellung der Anpassung der Phasenlage eines Oszillatorsignals an die Phasenlage des zeitlichen Verlaufs eines Schweißparameters, dessen Änderung durch eine Relativbewegung zwischen einer Schweißelektrode des Schweißbrenners und einem Schmelzbad eines Werkstücks hervorgerufen wurde.

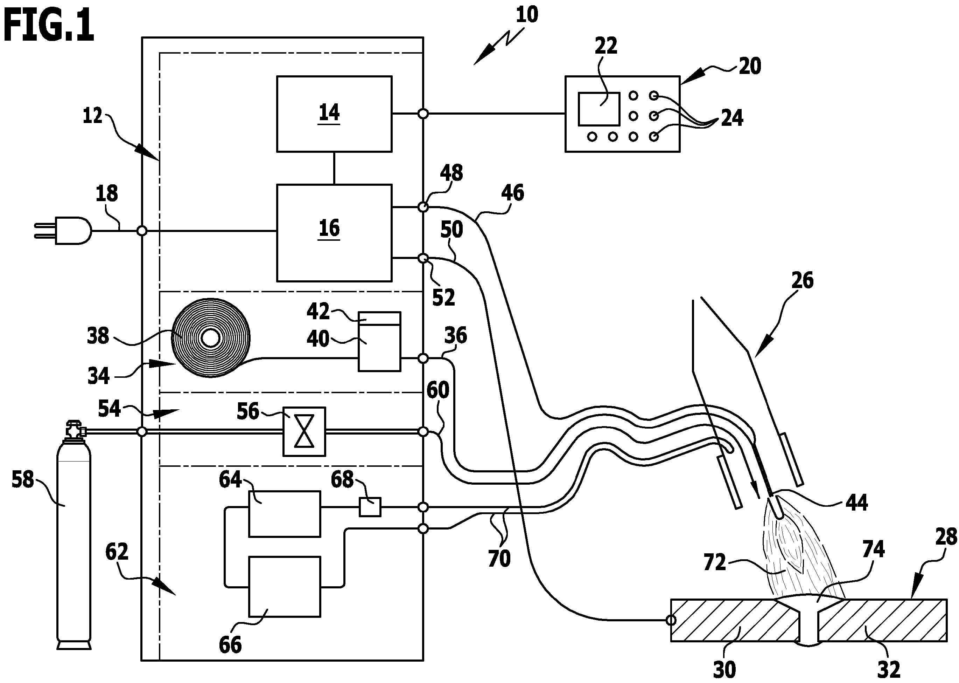

In Figur 1 ist schematisch eine Schweißeinrichtung dargestellt, die insgesamt mit dem Bezugszeichen 10 belegt ist. Sie umfasst eine erfindungsgemäße Schweißstromquelle 12, die ein Steuerteil 14 und ein vom Steuerteil 14 gesteuertes Leistungsteil 16 aufweist. Mittels des Steuerteils 14 kann das Leistungsteil 16 gesteuert werden zur Abgabe eines Schweißstroms. Über ein Versorgungskabel 18 kann die Schweißstromquelle 12 mit einem Energieversorgungsnetz, insbesondere mit einem öffentlichen Versorgungsnetz, beispielsweis mit einem 230 V oder 400 V Wechselspannungsnetz, verbunden werden.

Die Schweißeinrichtung 10 weist eine Bedieneinheit 20 auf mit einem berührungsempfindlichen Bildschirm 22 (Touchscreen) und mit Stellelementen 24, die beispielsweise als Drehknöpfe ausgestaltet sein können. Die Bedieneinheit 20 steht mit dem Steuerteil 14 in elektrischer Verbindung.

Die Schweißeinrichtung 10 weist einen Schweißbrenner 26 auf, der vom Schweißer oder alternativ mittels einer an sich bekannten und deshalb in der Zeichnung zur Erzielung einer besseren Übersicht nicht dargestellten Positioniereinrichtung relativ zu einem Werkstück 28 bewegt werden kann. Das Werkstück 28 weist ein erstes Werkstückteil 30 und ein zweites Werkstückteil 32 auf. Die beiden Werkstückteile 30, 32 können mittels der Schweißeinrichtung 10 miteinander verschweißt werden.

Dem Schweißbrenner 26 kann von einer Schweißdrahtvorschubeinrichtung 34 der Schweißeinrichtung 10 kontinuierlich ein Schweißdraht 36 zugeführt werden. Der Schweißdraht 36 ist auf einer Vorratstrommel 38 der Schweißdrahtvorschubeinrichtung 34 bevorratet und kann mit Hilfe eines Antriebsmotors 40 der Schweißdrahtvorschubeinrichtung 34 zum Schweißbrenner 26 bewegt werden. Dem Antriebsmotor 40 ist ein Motorsteuerungsglied 42 zugeordnet, das über eine an sich bekannte und deshalb in der Zeichnung nicht dargestellte Steuerleitung mit dem Steuerteil 14 der Schweißstromquelle 12 verbunden ist. Das Steuerteil 14 stellt dem Motorsteuerungsglied 42 Steuersignale zur Steuerung des Antriebsmotors 40 der Schweißdrahtvorschubeinrichtung 34 bereit. Mittels des Motorsteuerungsglieds 42 kann die Drehzahl des Antriebsmotors 40 in Abhängigkeit von den Steuersignalen des Steuerteils 14 gesteuert werden zur Erzielung einer gewünschten Vorschubgeschwindigkeit, mit der der Schweißdraht 36 dem Schweißbrenner 26 zugeführt wird.

Das dem Werkstück 28 zugewandte freie Ende des Schweißdrahts 36 bildet eine abschmelzende Schweißelektrode 44 aus, die über eine erste Stromleitung 46 an einen ersten Ausgang 48 des Leistungsteils 16 der Schweißstromquelle 12 angeschlossen werden kann. Das zu verschweißende Werkstück 28 kann über eine zweite Stromleitung 50 an einen zweiten Ausgang 52 des Leistungsteils 16 angeschlossen werden.

Der Schweißelektrode 44 kann ein Schutzgas zugeführt werden. Die Schweißeinrichtung 10 weist hierzu eine Gaszufuhreinrichtung 54 auf mit einem steuerbaren Strömungsregler 56, der über eine an sich bekannte und deshalb zur Erzielung einer besseren Übersicht in der Zeichnung nicht dargestellte Steuerleitung mit dem Steuerteil 14 der Schweißstromquelle 12 verbunden ist. Der Strömungsregler 56 kann vom Steuerteil 14 gesteuert werden, so dass die Strömungsrate des Schutzgases entsprechend einem vom Steuerteil 14 bereitgestellten Steuersignal verändert werden kann. Als Strömungsrate wird hierbei eine bestimmte Menge an Schutzgas verstanden, die der Schweißelektrode 44 pro Zeiteinheit aus einem Gasvorrat 58 über eine Gasleitung 60 zugeführt wird.

Die Schweißeinrichtung 10 weist im dargestellten Ausführungsbeispiel auch eine Kühlmittelzufuhreinrichtung 62 auf mit einer Kühlmittelpumpe 64, einem Wärmetauscher 66 und einem Durchflusssensor 68. Mittels des Durchflusssensors 68 kann die dem Schweißbrenner 26 über eine Kühlmittelleitung 70 pro Zeiteinheit zugeführte Kühlmittelmenge erfasst werden. Der Durchflusssensor 68 und die Kühlmittelpumpe 64 stehen über eine an sich bekannte und deshalb zur Erzielung einer besseren Übersicht in der Zeichnung nicht dargestellte Steuerleitungen mit dem Steuerteil 14 der Schweißstromquelle 12 in elektrischer Verbindung, so dass die Kühlmittelpumpe 64 vom Steuerteil 14 gesteuert werden kann. Es kann somit eine bestimmte Kühlmittelmenge vorgegeben werden, die pro Zeiteinheit dem Schweißbrenner 26 zugeführt wird. Mit Hilfe des Wärmetauschers 66 kann das Kühlmittel, vorzugsweise Wasser, fortlaufend gekühlt werden.

Während des Betriebs der Schweißeinrichtung 10 bildet sich zwischen der Schweißelektrode 44 und dem Werkstück 28 ein Lichtbogen 72 aus. Unter dem Einfluss des Lichtbogens schmilzt das freie Ende des Schweißdrahts 36 und das verflüssigte Material geht über in ein Schmelzbad 74, das sich im Bereich zwischen dem ersten Werkstückteil 30 und dem zweiten Werkstückteil 32 ausbildet.

Zur Erzielung einer qualitativ hochwertigen Schweißnaht zwischen den beiden Werkstückteilen 30, 32 kann der Schweißer den Schweißbrenner 26 und mit diesem die Schweißelektrode 44 relativ zum Schmelzbad 74 zyklisch bewegen. Eine derartige zyklische Relativbewegung ist insbesondere von Vorteil, wenn die Schweißnaht zwischen dem ersten Werkstückteil 30 und dem zweiten Werkstückteil 32 in vertikaler Richtung verläuft, denn hierbei hat der Schweißer dafür Sorge zu tragen, dass sich das flüssige Schmelzbad 74 an bereits erstarrtem Schweißmaterial abstützt. Die zyklische Relativbewegung zwischen der Schweißelektrode 44 und dem Schmelzbad 74 hat eine periodische Änderung von Schweißparametern zur Folge. Im dargestellten Ausführungsbeispiel wird die durch die zyklische Relativbewegung hervorgerufene periodische Änderung des Schweißstroms, das heißt des Ausgangsstroms des Leistungsteils 16, vom Steuerteil 14 überwacht. Die Periodizität und der zeitliche Verlauf des Schweißstroms werden erfasst und mindestens ein Schweißparameter, beispielsweise die Vorschubgeschwindigkeit des Schweißdrahtes 36, wird mit der erfassten Periodizität und in Abhängigkeit vom erfassten zeitlichen Verlauf periodisch verändert.

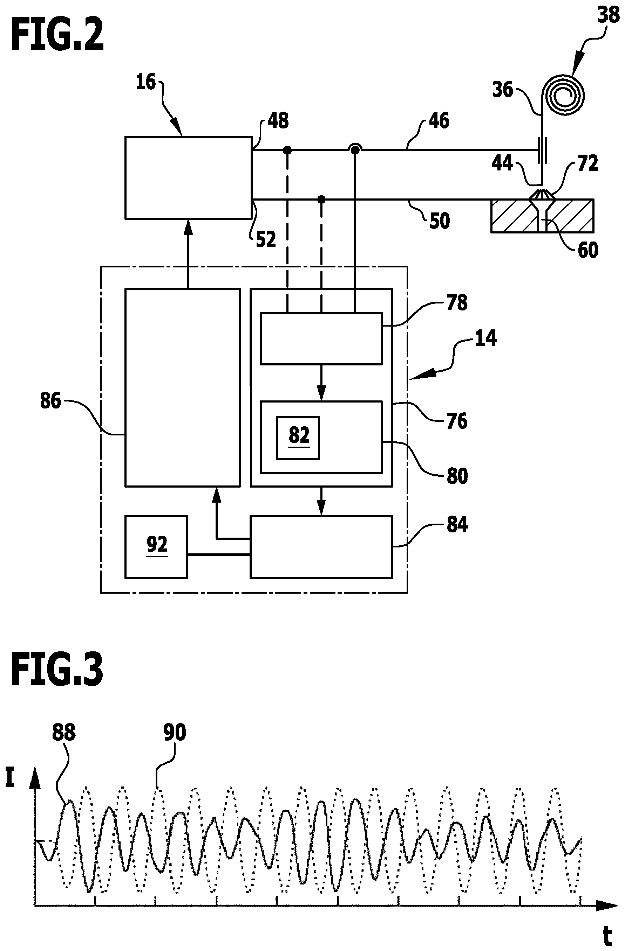

Das Steuerteil 14 weist ein in Figur 2 dargestelltes Erfassungsglied 76 auf mit einer Messeinrichtung 78 und mit einer Signalerzeugungseinrichtung 80. Mittels der Messeinrichtung 78 kann im dargestellten Ausführungsbeispiel der zeitliche Verlauf des der Schweißelektrode 44 bereitgestellten Schweißstroms erfasst werden. Die Messeinrichtung 78 stellt der Signalerzeugungseinrichtung 80 ein entsprechendes Messsignal bereit. Die Signalerzeugungseinrichtung 80 weist einen veränderbaren Oszillator 82 auf, dessen Frequenz und Phasenlage an die Frequenz und Phasenlage des Messsignals und damit an die Frequenz und Phasenlage des erfassten zeitlichen Verlaufs des Schweißstroms angepasst werden kann. Das von der Signalerzeugungseinrichtung 80 erzeugte Oszillatorsignal wird anschließend mittels eines Signalverarbeitungsglieds 84 unter Beibehaltung seiner Frequenz und Phasenlage an einen gewünschten Signalverlauf angeglichen. Der angeglichene Signalverlauf wird dann einem Steuerglied 86 des Steuerteils 14 bereitgestellt zur Steuerung von mindestens einem Schweißparameter, beispielsweise der Vorschubgeschwindigkeit des Schweißdrahtes 36.

Die Signalerzeugungseinrichtung 80 ist an einen Ausgang der Messeinrichtung 78 angeschlossen und wird von der Messeinrichtung 78 mit dem Messsignal versorgt, das dem zeitlichen Verlauf des Schweißstroms entspricht, dessen periodische Änderung durch die Relativbewegung zwischen der Schweißelektrode 44 und dem Schmelzbad 74 hervorgerufen wird. Bevor das Messsignal der Signalerzeugungseinrichtung 80 bereitgestellt wird, kann es von der Messeinrichtung 78 mit Hilfe eines Filters geglättet werden. In Figur 3 ist ein derartiges Messsignal schematisch dargestellt und mit dem Bezugszeichen 88 belegt. Durch die Glättung des Messsignals 88 werden zufällige Schwankungen des Schweißstroms beseitigt und spielen daher für die weitere Signalaufbereitung keine Rolle.

Wie bereits erwähnt, weist die Signalerzeugungseinrichtung 80 den veränderbaren Oszillator 82 auf. Der Oszillator 82 stellt ein Oszillatorsignal bereit, dessen Frequenz und Phasenlage an die Frequenz und die Phasenlage des Messsignals 88 angepasst werden können. Die Anpassung der Frequenz und der Phasenlage erfolgt mit Hilfe einer dem Fachmann an sich bekannten und deshalb in der Zeichnung zur Erzielung einer besseren Übersicht nicht dargestellten Phasenregelschleife (Phase-Locked Loop, PLL).

Der zeitliche Verlauf der Anpassung des Oszillatorsignals ist in Figur 3 schematisch dargestellt. Das Oszillatorsignal ist mit dem Bezugszeichen 90 belegt. Zu Beginn der Anpassung ist das Oszillatorsignal 90 relativ zum Messsignal 88 noch deutlich phasenverschoben, mit zunehmender Anpassungszeit passt sich das Oszillatorsignal 90 kontinuierlich an den Verlauf des Messsignals 88 an. Nach erfolgter Anpassung sind die Frequenz und Phasenlage des Oszillatorsignals 90 identisch mit der Frequenz und Phasenlage des zeitlichen Verlaufs der durch die Relativbewegung zwischen der Schweißelektrode 44 und dem Schmelzbad 74 hervorgerufenen zyklischen Änderung des Schweißstroms.

Das angepasste Oszillatorsignal 90 wird an das Signalverarbeitungsglied 84 des Steuerteils 14 übertragen. Das Signalverarbeitungsglied 84 verarbeitet das angepasste Oszillatorsignal 90, indem es das Oszillatorsignal 90 unter Beigehaltung seiner Frequenz und Phasenlage an einen gewünschten Signalverlauf angleicht. Das Steuerteil 14 weist hierzu ein Speicherglied 92 auf, in dem mehrere vorgegebene Signalverläufe gespeichert sind, zum Beispiel ein sinusförmiger Signalverlauf, ein rechteckförmiger Signalverlauf und/oder ein sägezahnförmiger Signalverlauf. Der Schweißer hat die Möglichkeit, an der Bedieneinheit 20 einen gewünschten Signalverlauf auszuwählen. Das Oszillatorsignal 90 wird dann mittels des Signalverarbeitungsglieds 84 an den gewünschten Signalverlauf angeglichen. Nach der Angleichung liegt somit ein Steuersignal vor, das dem Steuerglied 86 bereitgestellt wird und die Grundlage bildet für die Steuerung von mindestens einem Schweißparameter.

Der Schweißer kann an der Bedieneinheit 20 den mindestens einen Schweißparameter auswählen, der mit der Periodizität der durch die Relativbewegung zwischen der Schweißelektrode 44 und dem Schmelzbad 74 hervorgerufenen Änderung des Schweißstroms vom Steuerglied 86 gesteuert werden soll. Hierbei kann es sich beispielsweise um die Vorschubgeschwindigkeit des den Schweißbrenner 26 zugeführten Schweißdrahtes 36 handeln. Alternativ oder ergänzend kann es sich beispielsweise um die Strömungsrate des der Schweißelektrode 44 zugeführten Schutzgases handeln.

Es kann auch vorgesehen sein, dass die durch eine Relativbewegung zwischen der Schweißelektrode 44 und dem Schmelzbad 74 hervorgerufene periodische Änderung des Schweißstroms während einer Erfassungsphase mittels der Messeinrichtung 78 erfasst wird, und dass anschließend während einer Steuerungsphase der Schweißstrom vom Steuerglied 86 mit der erfassten Periodizität verändert wird.

Im voranstehend erläuterten Ausführungsbeispiel wird die durch eine Relativbewegung zwischen der Schweißelektrode 44 und dem Schmelzbad 74 hervorgerufene zeitliche Änderung des Schweißstroms mittels der Messeinrichtung 78 erfasst, und diese zeitliche Änderung des Schweißstroms bildet die Grundlage für die periodische zeitliche Änderung von mindestens einem Schweißparameter. Alternativ kann vorgesehen sein, dass die periodische zeitliche Änderung eines anderen Schweißparameters, die durch eine periodische Relativbewegung zwischen der Schweißelektrode 44 und dem Schmelzbad 74 hervorgerufen wird, die Grundlage für die periodische Änderung eines Schweißparameters bildet. Beispielsweise kann während einer Relativbewegung der Schweißelektrode 44 mittels der Messeinrichtung 78 die Ausgangsspannung, das heißt die Schweißspannung, des Leistungsteils 16 erfasst werden. Die Messeinrichtung 78 kann hierbei über eine erste Spannungsmessleitung 94 und eine zweite Spannungsmessleitung 96, die in der Zeichnung gestrichelt dargestellt sind, mit den Ausgängen 48 und 52 des Leistungsteils 16 verbunden sein, um den zeitlichen Verlauf der Ausgangsspannung zu erfassen.

Den Wertebereich, insbesondere den Minimalwert und den Maximalwert des mindestens einen vom Steuerglied 86 periodisch veränderten Schweißparameters kann der Schweißer mit Hilfe von Stellelementen 24 der Bedieneinheit 20 eingeben. Er kann dadurch dem Steuerglied 86 vorgeben, welche Absolutwerte der mindestens eine, vom Steuerglied 86 gesteuerte Schweißparameter bei einer periodischen Änderung einnimmt. Hierbei kann vorgesehen sein, dass die Absolutwerte während einer Übergangsphase allmählich erhöht werden, bis die eingegebenen Minimal- und Maximalwerte erreicht sind.

## Patentansprüche

1. Lichtbogen-Schweißverfahren, bei dem der Schweißelektrode (44) eines Schweißbrenners (26) von einer Schweißstromquelle (12) Schweißenergie zugeführt wird und zwischen der Schweißelektrode (44) und einem auf einem Werkstück (28) angeordneten Schmelzbad (74) ein elektrischer Lichtbogen (72) brennt, **dadurch gekennzeichnet, dass** die Periodizität einer durch eine Relativbewegung zwischen der Schweißelektrode (44) und dem Schmelzbad (74) hervorgerufenen periodischen Änderung eines Schweißparameters erfasst wird und mindestens ein Schweißparameter von einem Steuerteil (14) der Schweißstromquelle (12) selbsttätig mit der erfassten Periodizität periodisch verändert wird.

2. Lichtbogen-Schweißverfahren nach Anspruch 1, **dadurch gekennzeichnet, dass** der zeitliche Verlauf der durch eine Relativbewegung zwischen der Schweißelektrode (44) und dem Schmelzbad (74) hervorgerufenen periodischen Änderung eines Schweißparameters erfasst wird und vom Steuerteil (14) der zeitliche Verlauf von mindestens einem Schweißparameter in Abhängigkeit vom erfassten zeitlichen Verlauf gesteuert wird.

3. Lichtbogen-Schweißverfahren nach Anspruch 1 oder 2, **dadurch gekennzeichnet, dass** die Periodizität der durch eine Relativbewegung zwischen der Schweißelektrode (44) und dem Schmelzbad (74) hervorgerufenen periodischen Änderung des Schweißstroms erfasst wird.

4. Lichtbogen-Schweißverfahren nach Anspruch 1 oder 2, **dadurch gekennzeichnet, dass** die Periodizität der durch eine Relativbewegung zwischen der Schweißelektrode (44) und dem Schmelzbad (74) hervorgerufenen periodischen Änderung der Schweißspannung erfasst wird.

5. Lichtbogen-Schweißverfahren nach einem der voranstehenden Ansprüche, **dadurch gekennzeichnet, dass** vom Steuerteil (14) der Schweißstrom, die Schweißspannung, die Vorschubgeschwindigkeit eines dem Schweißbrenner (26) zugeführten Schweißdrahtes (36) und/oder die Strömungsrate eines der Schweißelektrode (44) zugeführten Schutzgases mit der erfassten Periodizität verändert werden.

6. Lichtbogen-Schweißverfahren nach einem der voranstehenden Ansprüche, **dadurch gekennzeichnet, dass** der mindestens eine Schweißparameter, der vom Steuerteil (14) mit der erfassten Periodizität periodisch verändert wird, aus einer Gruppe vorgegebener Schweißparameter ausgewählt wird.

7. Lichtbogen-Schweißverfahren nach Anspruch 6, **dadurch gekennzeichnet, dass** die Gruppe vorgegebener Schweißparameter zumindest den Schweißstrom, die Schweißspannung, die Vorschubgeschwindigkeit des dem Schweißbrenner (26) zugeführten Schweißdrahtes (36) und/oder die Strömungsrate des der Schweißelektrode (44) zugeführten Schutzgases aufweist.

8. Lichtbogen-Schweißverfahren nach einem der voranstehenden Ansprüche, **dadurch gekennzeichnet, dass** der Wertebereich, den der mindestens eine, vom Steuerteil (14) mit der erfassten Periodizität veränderte Schweißparameter periodisch durchläuft, dem Steuerteil (14) vorgegeben wird.

9. Lichtbogen-Schweißverfahren nach Anspruch 8, **dadurch gekennzeichnet, dass** der Minimalwert und der Maximalwert des mindestens einen vom Steuerteil (14) mit der erfassten Periodizität periodisch veränderten Schweißparameters dem Steuerteil (14) vorgegeben werden.

10. Lichtbogen-Schweißverfahren nach einem der voranstehenden Ansprüche, **dadurch gekennzeichnet, dass** der Signalverlauf des mindestens einen Schweißparameters, der vom Steuerteil (14) mit der erfassten Periodizität periodisch verändert wird, dem Steuerteil (14) vorgegeben wird.

11. Lichtbogen-Schweißverfahren nach Anspruch 10, **dadurch gekennzeichnet, dass** der Signalverlauf aus einer Gruppe vorgegebener Signalverläufe ausgewählt wird.

12. Lichtbogen-Schweißverfahren nach Anspruch 11, **dadurch gekennzeichnet, dass** die Gruppe vorgegebener Signalverläufe zumindest einen sinusförmigen Signalverlauf, einen rechteckförmigen Signalverlauf und/oder einen sägezahnförmigen Signalverlauf aufweist.

13. Schweißstromquelle zur Durchführung des Lichtbogen-Schweißverfahrens nach einem der voranstehenden Ansprüche, wobei die Schweißstromquelle (12) ein Steuerteil (14) und ein vom Steuerteil (14) steuerbares Leistungsteil (16) aufweist, wobei eine Schweißelektrode (44) eines Schweißbrenners (26) über eine Stromleitung (46) an einen Ausgang (48, 52) des Leistungsteils (16) anschließbar ist und der Schweißelektrode (44) vom Leistungsteil (16) Schweißenergie bereitstellbar ist zur Ausbildung eines Lichtbogens (72) zwischen der Schweißelektrode (44) und einem auf einem Werkstück (28) angeordneten Schmelzbad (74), **dadurch gekennzeichnet, dass** die Schweißstromquelle (12) ein Erfassungsglied (76) aufweist zum Erfassen der Periodizität einer durch eine Relativbewegung zwischen der Schweißelektrode (44) und dem Schmelzbad (74) hervorgerufenen periodischen Änderung eines Schweißparameters, und dass das Steuerteil (14) ein mit dem Erfassungsglied (76) gekoppeltes Steuerglied (86) aufweist und vom Steuerglied (86) mindestens ein Schweißparameter mit der erfassten Periodizität periodisch veränderbar ist.

14. Schweißstromquelle nach Anspruch 13, **dadurch gekennzeichnet, dass** das Erfassungsglied (76) in das Steuerteil (14) integriert ist.

15. Schweißstromquelle nach Anspruch 13 oder 14, **dadurch gekennzeichnet, dass** das Erfassungsglied (76) eine Messeinrichtung (78) aufweist zum Erfassen des zeitlichen Verlaufs der durch eine Relativbewegung zwischen der Schweißelektrode (44) und dem Schmelzbad (74) hervorgerufenen periodischen Änderung eines Schweißparameters, und dass die Schweißstromquelle eine Signalerzeugungseinrichtung (80) aufweist zum Erzeugen eines Steuersignals in Abhängigkeit von dem von der Messeinrichtung (78) erfassten zeitlichen Verlauf.

16. Schweißstromquelle nach Anspruch 15, **dadurch gekennzeichnet, dass** die Signalerzeugungseinrichtung (80) einen veränderbaren Oszillator (82) aufweist, dessen Frequenz und Phasenlage an die Frequenz und Phasenlage des von der Messeinrichtung (78) erfassten zeitlichen Verlaufs anpassbar ist.

17. Schweißstromquelle nach Anspruch 16, **dadurch gekennzeichnet, dass** die Schweißstromquelle (12) ein Signalverarbeitungsglied (84) aufweist zur Verarbeitung eines vom Oszillator (82) bereitgestellten Oszillatorsignals (90).

18. Schweißstromquelle nach Anspruch 17, **dadurch gekennzeichnet, dass** dem Signalverarbeitungsglied (84) mindestens ein Signalverlauf vorgebbar ist und das Oszillatorsignal (90) unter Beibehaltung seiner Frequenz und Phasenlage an den vorgegebenen Signalverlauf angleichbar ist.

19. Schweißstromquelle nach Anspruch 18, **dadurch gekennzeichnet, dass** der Signalverlauf aus einer Gruppe vorgegebener Signalverläufe auswählbar ist.

## Claims

1. Arc welding method, in which welding energy is supplied to the welding electrode (44) of a welding torch (26) by a welding power source (12) and an electrical arc (72) burns between the welding electrode (44) and a molten bath (74) arranged on a workpiece (28), **characterized in that** the periodicity of a periodic change of a welding parameter caused by a relative movement between the welding electrode (44) and the molten bath (74) is recorded and at least one welding parameter is periodically changed automatically with the recorded periodicity by a control unit (14) of the welding power source (12).

2. Arc welding method according to claim 1, **characterized in that** the development over time of the periodic change of a welding parameter caused by a relative movement between the welding electrode (44) and the molten bath (74) is recorded and the development over time of at least one welding parameter is controlled by the control unit (14) as a function of the recorded timeframe.

3. Arc welding method according to claim 1 or 2, **characterized in that** the periodicity of the periodic change of the welding current caused by a relative movement between the welding electrode (44) and the molten bath (74) is recorded.

4. Arc welding method according to claim 1 or 2, **characterized in that** the periodicity of the periodic change of the welding voltage caused by a relative movement between the welding electrode (44) and the molten bath (74) is recorded.

5. Arc welding method according to one of the above claims, **characterized in that** the welding current, the welding voltage, the feed speed of a welding rod (36) supplied to the welding torch (26) and/or the flow rate of an inert gas supplied to the welding electrode (44) are changed with the recorded periodicity by the control unit (14).

6. Arc welding method according to one of the above claims, **characterized in that** the at least one welding parameter, which is periodically changed by the control unit (14) with the recorded periodicity, is selected from a group of pre-determined welding parameters.

7. Arc welding method according to claim 6, **characterized in that** the group of pre-determined welding parameters includes at least the welding current, the welding voltage, the feed speed of the welding rod (36) supplied to the welding torch (26) and/or the flow rate of the inert gas supplied to the welding electrode (44).

8. Arc welding method according to one of the above claims, **characterized in that** the range of values, through which the at least one welding parameter changed with the recorded periodicity by the control unit (14) passes, is specified to the control unit (14).

9. Arc welding method according to claim 8, **characterized in that** the minimum value and the maximum value of the at least one welding parameter changed with the recorded periodicity by the control unit (14) are specified to the control unit (14).

10. Arc welding method according to one of the above claims, **characterized in that** the signal profile of the at least one welding parameter, which is periodically changed with the recorded periodicity by the control unit (14), is specified to the control unit (14).

11. Arc welding method according to claim 10, **characterized in that** the signal profile is selected from a group of pre-determined signal profiles.

12. Arc welding method according to claim 11, **characterized in that** the group of pre-determined signal profiles comprises at least one sinusoidal signal profile, a rectangular signal profile or a sawtooth-shaped signal profile.

13. Welding power source to carry out the arc welding method according to one of the above claims, wherein the welding power source (12) has a control unit (14) and a power unit (16) controllable by the control unit (14), wherein a welding electrode (44) of a welding torch (26) can be connected via a powerline (46) to an output (48, 52) of the power unit (16) and welding energy is supplied to the welding electrode (44) by the power unit (16) to form an arc (72) between the welding electrode (44) and a molten bath (74) arranged on a workpiece (28), **characterized in that** the welding power source (12) comprises a detection member (76) to record the periodicity of a periodic change of a welding parameter caused by a relative movement between the welding electrode (44) and the molten bath (74) and **in that** the control unit (14) comprises a control member (86), coupled with the detection member (76) and at least one welding parameter can be periodically changed with the recorded periodicity by the control member (86).

14. Welding power source according to claim 13, **characterized in that** the detection member (76) is integrated in the control unit (14).

15. Welding power source according to claim 13 or 14, **characterized in that** the detection member (76) has a measuring instrument (78) for recording the development over time of a periodic change of a welding parameter caused by a relative movement between the welding electrode (44) and the molten bath (74) and **in that** the welding power source has a signal generation device (80) for producing a control signal as a function of the development over time recorded by the measuring instrument (78).

16. Welding power source according to claim 15, **characterized in that** the signal generation device (80) has a changeable oscillator (82), the frequency and phase position of which can be adapted to the frequency and phase position of the development over time recorded by the measuring instrument (78).

17. Welding power source according to claim 16, **characterized in that** the welding power source (12) has a signal processing member (84) for processing an oscillator signal (90) provided by the oscillator (82).

18. Welding power source according to claim 17, **characterized in that** at least one signal profile is specified to the signal processing member (84) and the oscillator signal (90) can be matched to the pre-determined signal profile while maintaining its frequency and phase position.

19. Welding power source according to claim 18, **characterized in that** the signal profile can be selected from a group of pre-determined signal profiles.

## Revendications

1. Procédé de soudage à l'arc, selon lequel de l'énergie de soudage est amenée par une source de courant de soudage (12) à l'électrode de soudage (44) d'un chalumeau de soudage (26) et un arc électrique (72) jaillit entre l'électrode de soudage (44) et un bain de fusion (74) situé sur une pièce (28), **caractérisé en ce que** la périodicité d'une modification périodique d'un paramètre de soudage provoquée par un mouvement relatif entre l'électrode de soudage (44) et le bain de fusion (74) est enregistrée et au moins un paramètre de soudage est modifié périodiquement automatiquement par une unité de commande (14) de la source de courant de soudage (12) à l'aide de la périodicité enregistrée.

2. Procédé de soudage à l'arc selon la revendication 1, **caractérisé en ce que** la variation dans le temps de la modification périodique d'un paramètre de soudage provoquée par un mouvement relatif entre l'électrode de soudage (44) et le bain de fusion (74) est enregistrée et la variation dans le temps d'au moins un paramètre de soudage est commandée par l'unité de commande (14) en fonction de la variation dans le temps enregistrée.

3. Procédé de soudage à l'arc selon la revendication 1 ou 2, **caractérisé en ce que** la périodicité de la modification périodique du courant de soudage provoquée par un mouvement relatif entre l'électrode de soudage (44) et le bain de fusion (74) est enregistrée.

4. Procédé de soudage à l'arc selon la revendication 1 ou 2, **caractérisé en ce que** la périodicité de la modification périodique de la tension de soudage provoquée par un mouvement relatif entre l'électrode de soudage (44) et le bain de fusion (74) est enregistrée.

5. Procédé de soudage à l'arc selon l'une quelconque des revendications précédentes, **caractérisé en ce que** le courant de soudage, la tension de soudage, la vitesse d'avance d'un fil à souder (36) amené au chalumeau de soudage (26) et/ou le débit d'un gaz de protection amené à l'électrode de soudage (44) sont modifiés par l'unité de commande (14) à l'aide de la périodicité enregistrée.

6. Procédé de soudage à l'arc selon l'une quelconque des revendications précédentes, **caractérisé en ce que** le au moins un paramètre de soudage, qui est modifié périodiquement par l'unité de commande (14) à l'aide de la périodicité enregistrée, est sélectionné dans un groupe de paramètres de soudage spécifiés.

7. Procédé de soudage à l'arc selon la revendication 6, **caractérisé en ce que** le groupe de paramètres de soudage spéficiés comprend au moins le courant de soudage, la tension de soudage, la vitesse d'avance du fil à souder (36) amené au chalumeau de soudage (26) et/ou le débit du gaz de protection amené à l'électrode de soudage (44).

8. Procédé de soudage à l'arc selon l'une quelconque des revendications précédentes, **caractérisé en ce que** la plage de valeurs que parcourt périodiquement le au moins un paramètre de soudage modifié par l'unité de commande (14) à l'aide de la périodicité enregistrée est spécifiée à l'unité de commande (14) .

9. Procédé de soudage à l'arc selon la revendication 8, **caractérisé en ce que** la valeur minimale et la valeur maximale du au moins un paramètre de soudage modifié périodiquement par l'unité de commande (14) à l'aide de la périodicité enregistrée sont spécifiées à l'unité de commande (14).

10. Procédé de soudage à l'arc selon l'une quelconque des revendications précédentes, **caractérisé en ce que** le profil de signal du au moins un paramètre de soudage, qui est modifié par l'unité de commande (14) à l'aide de la périodicité enregistrée, est spécifié à l'unité de commande (14).

11. Procédé de soudage à l'arc selon la revendication 10, **caractérisé en ce que** le profil de signal est sélectionné dans un groupe de profils de signal spécifiés.

12. Procédé de soudage à l'arc selon la revendication 11, **caractérisé en ce que** le groupe de profils de signal spécifiés présente au moins un profil de signal sinusoïdal, un profil de signal rectangulaire et/ou un profil de signal en dents de scie.

13. Source de courant de soudage pour la mise en oeuvre d'un procédé de soudage à l'arc selon l'une quelconque des revendications précédentes, dans lequel la source de courant de soudage (12) comprend une unité de commande (14) et une unité de puissance (16) pouvant être commandée par l'unité de commande (14), dans lequel une électrode de soudage (44) d'un chalumeau de soudage (26) peut être raccordée à une sortie (48, 52) de l'unité de puissance (16) par une ligne électrique (46) et une énergie de soudage peut être fournie à l'électrode de soudage (44) par l'unité de puissance (16) pour la formation d'un arc électrique (72) entre l'électrode de soudage (44) et un bain de fusion (74) situé sur une pièce (28), **caractérisé en ce que** la source de courant de soudage (12) présente un organe d'enregistrement (76) destiné à enregistrer la périodicité d'une modification périodique d'un paramètre de soudage provoquée par un mouvement relatif entre l'électrode de soudage (44) et le bain de fusion (74), et **en ce que** l'unité de commande (14) comprend un organe de commande (86) couplé à l'organe d'enregistrement (76) et au moins un paramètre de soudage peut être modifié périodiquement par l'organe de commande (86) à l'aide de la périodicité enregistrée.

14. Source de courant de soudage selon la revendication 13, **caractérisée en ce que** l'organe d'enregistrement (76) est intégré dans l'unité de commande (14).

15. Source de courant de soudage selon la revendication 13 ou 14, **caractérisée en ce que** l'organe d'enregistrement (76) comprend un dispositif de mesure (78) pour l'enregistrement de la variation dans le temps de la modification périodique d'un paramètre de soudage provoquée par un mouvement relatif entre l'électrode de soudage (44) et le bain de fusion (74), et **en ce que** la source de courant de soudage comprend un dispositif de génération de signal (80) pour la génération d'un signal de commande en fonction de la variation dans le temps enregistrée par le dispositif de mesure (78).

16. Source de courant de soudage selon la revendication 15, **caractérisée en ce que** le dispositif de génération de signal (80) comprend un oscillateur (82) pouvant être modifié, dont la fréquence et la position de phase peuvent être adaptées à la fréquence et à la position de phase de la variation dans le temps enregistrée par le dispositif de mesure (78).

17. Source de courant de soudage selon la revendication 16, **caractérisée en ce que** la source de courant de soudage (12) comprend un organe de traitement de signal (84) pour le traitement d'un signal d'oscillateur (90) fourni par l'oscillateur (82).

18. Source de courant de soudage selon la revendication 17, **caractérisée en ce qu'**au moins un profil de signal peut être spécifié à l'organe de traitement de signal (84) et le signal d'oscillateur (90) peut être ajusté au profil de signal spécifié avec maintien de sa fréquence et de sa position de phase.

19. Source de courant de soudage selon la revendication 18, **caractérisée en ce que** le profil de signal peut être sélectionné dans un groupe de profils de signal spécifiés.
